# EUROPEAN PATENT APPLICATION

(11) **EP 4 389 644 A1**
(43) Date of publication of application: **26.06.2024**
(21) Application number: 22882910.7
(22) Date of filing: 19.10.2022
(51) Int. Cl.: B65G 1/04

(54) **ARTICLE TRANSFER APPARATUS AND WAREHOUSING SYSTEM**

(30) Priority: 22.10.2021 CN 202111236211
(71) Applicant: Hangzhou Hikrobot Co., Ltd., Hangzhou, Zhejiang 310051 (CN)
(72) Inventor: WANG, Zheng, Hangzhou, Zhejiang 310051 (CN); WU, Lingdong, Hangzhou, Zhejiang 310051 (CN); WU, Chao, Hangzhou, Zhejiang 310051 (CN)
(74) Representative: Goddar, Heinz J.
(86) International application number: PCT/CN2022/126224
(87) International publication number: WO 2023/066305

(57) **Abstract**

An article transfer device (1), including: a machine frame (11), a lift assembly (14), a conveying platform (12) and multiple loading plates (13). The multiple loading plates are connected with the machine frame by the lift assembly, and the conveying platform is at a bottom of a machine chamber of the machine frame. Each of the multiple loading plates is provided with a first comb structure (311) including multiple first loading rods (131), and the conveying platform is provided with a second comb structure including multiple second loading rods (121) and matching the first comb structure. When the article transfer device transfers articles, the lift assembly is configured to control the multiple loading plates to move along a direction perpendicular to the conveying platform, and the first comb structures of the multiple loading plates run through a plane where the second comb structure of the conveying platform is located, such that the multiple loading plates perform article exchange with the conveying platform.

## Description

### CROSS REFERENCE TO RELATED APPLICATIONS

This application claims priority to Chinese Patent Application No. 202111236211.1 filed on October 22, 2021, the entire content of which is incorporated herein by reference.

### TECHNICAL FIELD

The present disclosure relates to the technical field of logistics transportations, and in particular to article transfer devices and warehousing systems.

### BACKGROUND

At present, people prefer more and more to go shopping online. After users place an order, articles are delivered to the users by logistics transportation. The articles are usually transferred in multiple locations during the logistics transportation process. Every time the articles are transported to one transfer location, the articles are usually firstly stored in goods shelves, and then a material box robot takes away the articles from the goods shelves and places the articles onto the article transfer device, and then the article transfer device conveys the articles to a conveying belt, during the process of transmission on the conveyor belt, the articles for different destinations are sorted and then the articles are transported to a destination or a next transfer location.

### SUMMARY

According to an aspect of the present disclosure, there is provided an article transfer device, including: a machine frame, including a machine chamber; a lift assembly; a conveying platform, at a bottom of the machine chamber of the machine frame; and multiple loading plates, connected with the machine frame by the lift assembly. Each loading plate of the multiple loading plates is provided with a first comb structure including multiple first loading rods, and the conveying platform is provided with a second comb structure including multiple second loading rods and matching the first comb structure. When the article transfer device transfers articles, the lift assembly is configured to control the multiple loading plates to move along a direction perpendicular to the conveying platform, and thus first comb structures of the multiple loading plates run through a plane where the second comb structure of the conveying platform is located, such that the multiple loading plates perform article exchange with the conveying platform.

In some embodiments, for each of the multiple first loading rods, the first loading rod is a telescopic rod; when each loading plate of the multiple loading plates runs through a plane where the conveying platform is located to transfer an article to the conveying platform, the lift assembly is configured to control multiple telescopic rods of the loading plate to retract and is configured to control the loading plate to move down; when each loading plate of the multiple loading plates runs through the plane where the conveying platform is located to receive an article from the conveying platform, the lift assembly is configured to control the multiple telescopic rods of the loading plate to extend and is configured to control the loading plate to move up.

In some embodiments, the multiple first loading rods and the multiple second loading rods are alternately disposed.

In some embodiments, for each first loading rod of the multiple first loading rods, the first loading rod is a non-telescopic rod; when each loading plate of the multiple loading plates runs through the plane where the conveying platform is located to transfer an article to the conveying platform, the lift assembly is configured to control multiple non-telescopic rods of the loading plate to move down through the multiple second loading rods; when each loading plate of the multiple loading plates runs through the plane where the conveying platform is located to receive an article from the conveying platform, the lift assembly is configured to control the multiple non-telescopic rods of the loading plate to move up.

In some embodiments, the article transfer device further includes a control mechanism; the control mechanism is inside the machine frame or at an outer side of the machine frame; the control mechanism is configured to control the multiple second loading rods, the multiple loading plates and a conveying device for conveying articles to perform article exchange.

In some embodiments, for each second loading rod of the multiple second loading rods of the conveying platform, the second loading rod is a rotatable rod; the control mechanism is configured to control rotations of rotatable rods of the conveying platform, such that the conveying platform performs article exchange with the conveying device during the rotation of the rotatable rods of the conveying platform.

In some embodiments, for each second loading rod of the multiple second loading rods of the conveying platform, the second loading rod is a telescopic rod; when each loading plate runs through the plane where the conveying platform is located to perform article exchange with the conveying platform, the control mechanism is configured to control the telescopic rods of the conveying platform to extend or retract; the control mechanism is further configured to control the telescopic rods to rotate, such that the conveying platform performs article exchange with the conveying device during the rotation of the telescopic rods of the conveying platform.

In some embodiments, the multiple loading plates include a first loading plate and a second loading plate; the first loading plate is under the second loading plate; the first loading plate drops to a first predetermined position below the conveying platform and then stops dropping, and the second loading plate drops to stack on the first loading plate; the second loading plate moves to a second predetermined position from bottom up, and a hitching portion of the second loading plate is hung to a position limiter of the first loading plate, and the second loading plate then continues moving up to bring the first loading plate to move up by the hitching portion of the second loading plate.

In some embodiments, the multiple loading plates include a first loading plate and a second loading plate; the first loading plate includes a loading plate body, the first comb structure is provided transversely on the loading plate body, a direction guiding structure is provided vertically on the loading plate body, and a position limiter is provided at an end of the direction guiding structure away from the loading plate body; a hitching portion is provided on the second loading plate, the first loading plate is under the second loading plate, and the first loading plate is hung to the hitching portion of the second loading plate by the position limiter of the first loading plate; where the hitching portion of the second loading plate is inside the direction guiding structure of the first loading plate, such that the second loading plate moves up and down along the direction guiding structure of the first loading plate.

In some embodiments, the direction guiding structure provided vertically on the loading plate body includes an elongated guiding member, and a guiding groove is provided along a length direction of the elongated guiding member in the elongated guiding member; the position limiter is on a top end of the guiding groove; the hitching portion of the second loading plate is inside the guiding groove of the first loading plate, such that the second loading plate moves up and down along the guiding groove of the first loading plate.

In some embodiments, for each loading plate of the multiple loading plates, the guiding member of the loading plate includes a first guiding member and a second guiding member, and the first guiding member and the second guiding member are provided parallelly at both sides of the loading plate body of the loading plate; a first guiding groove is provided along a length direction of the first guiding member, and a second guiding groove is provided along a length direction of the second guiding member; the hitching portion of the second loading plate includes a first hitching portion and a second hitching portion; the first hitching portion of the second loading plate is in the first guiding groove of the first loading plate, and the second hitching portion of the second loading plate is in the second guiding groove of the first loading plate.

In some embodiments, the machine frame includes a first column and a second column, the first column and the second column are in parallel, and the machine chamber is formed between the first column and the second column; on the first column, a third guiding groove is provided along a length direction of the first column; on the second column, a fourth guiding groove is provided along a length direction of the second column; the third guiding groove is opposite to the fourth guiding groove; an end of the first hitching portion of the second loading plate is outside the first guiding groove of the first loading plate and inside the third guiding groove, such that the first loading plate and the second loading plate move up and down along the third guiding groove; an end of the second hitching portion of the second loading plate is outside the second guiding groove of the first loading plate and inside the fourth guiding groove, such that the first loading plate and the second loading plate move up and down along the fourth guiding groove.

In some embodiments, the direction guiding structure provided vertically on the loading plate body includes an elongated guiding member, and a guiding surface is provided along a length direction of the elongated guiding member on the elongated guiding member; the position limiter is at a top end of the guiding surface; the hitching portion of the second loading plate is mated with the guiding surface of the first loading plate, such that the second loading plate moves up and down along the guiding surface of the first loading plate.

In some embodiments, for each loading plate of the multiple loading plates, the guiding member of the loading plate includes a third guiding member and a fourth guiding member, the third guiding member and the fourth guiding member are provided parallelly at both sides of the loading plate body of the loading plate, and the position limiter is at top ends of the third guiding member and the fourth guiding member; a first guiding surface is provided along a length direction of the third guiding member, and a second guiding surface is provided along a length direction of the fourth guiding member; the hitching portion of the second loading plate includes a third hitching portion and a fourth hitching portion; the third hitching portion of the second loading plate is mated with the first guiding surface of the first loading plate, such that the third hitching portion of the second loading plate moves up and down along the first guiding surface of the first loading plate; and the fourth hitching portion of the second loading plate is mated with the second guiding surface of the first loading plate, such that the fourth hitching portion of the second loading plate moves up and down along the second guiding surface of the first loading plate.

In some embodiments, the machine frame includes a first column and a second column, the first column and the second column are in parallel, and the machine frame is formed between the first column and the second column; on the first column, a third guiding groove is provided along a length direction of the first column; on the second column, a fourth guiding groove is provided along a length direction of the second column; the third guiding groove is opposite to the fourth guiding groove; in the multiple loading plates, a first side of at least one loading plate is provided with a first protrusion portion, and a second side of the at least one loading plate is provided with a second protrusion portion; the first protrusion portion is inside the third guiding groove, such that the at least one loading plate moves up and down along the third guiding groove; the second protrusion portion is inside the fourth guiding groove, such that the at least one loading plate moves up and down along the fourth guiding groove.

In some embodiments, the lift assembly includes a drive mechanism and a traction member connected with the drive mechanism, and the traction member is connected with a loading plate on top in the multiple loading plates.

In some embodiments, in the multiple loading plates, a distance between two adjacent loading plates above the conveying platform is greater than a distance between two adjacent loading plates below the conveying platform.

According to another aspect of the present disclosure, there is provided a warehousing system, including a conveying device, an article storage mechanism and the above article transfer device; the article transfer device is connected with the conveying device; the article transfer device is configured to perform article exchange with the article storage mechanism and the conveying device respectively.

In some embodiments, the article storage mechanism is a material box robot.

In some embodiments, the conveying device is a roller conveying line.

The technical solutions provided by the embodiments of the present disclosure have the following beneficial effects.

For the article transfer device provided by the embodiments of the present disclosure, each loading plate of the article transfer device is provided with a first comb structure, and the conveying platform is provided with a second comb structure matching the first comb structure. When the article transfer device transfers articles, multiple loading plates move along a direction perpendicular to the conveying platform, and the first comb structure of each loading plate runs through a plane where the second comb structure of the conveying platform is located. In this way, articles on the loading plates can be transferred to the conveying platform or articles can be received from the conveying platform, so as to achieve article exchange between the article transfer device and the conveying platform. It can be seen that the multiple loading plates in the article transfer device move up and down along a direction perpendicular to the conveying platform, and will not occupy horizontal space, thereby reducing occupation space, saving the space and improving the space utilization rate.

It should be understood that the above general descriptions and the subsequent detailed descriptions are merely illustrative rather than limiting of the present disclosure.

### BRIEF DESCRIPTION OF DRAWINGS

FIG. 1 is a schematic diagram illustrating an article transfer device according to embodiments of the present disclosure.
FIG. 2 is a schematic diagram illustrating a loading plate according to embodiments of the present disclosure.
FIG. 3 is a schematic diagram illustrating a conveying platform according to embodiments of the present disclosure.
FIG. 4 is a schematic diagram of performing article exchange between loading plates and a conveying platform according to embodiments of the present disclosure.
FIG. 5 is a schematic diagram illustrating loading plates in a stacked stated below a conveying platform according to embodiments of the present disclosure.
FIG. 6 is a schematic diagram of performing article exchange among article storage mechanisms, an article transfer device and conveying devices according to embodiments of the present disclosure.
FIG. 7 is a structural schematic diagram of mutually hitching two adjacent loading plates according to embodiments of the present disclosure.
FIG. 8 is a structural schematic diagram illustrating a first loading plate in FIG. 7.
FIG. 9 is a structural schematic diagram of mutually hitching two adjacent loading plates according to another embodiment of the present disclosure.
FIG. 10 is a structural schematic diagram illustrating a first loading plate in FIG. 9.
FIG. 11 is a structural schematic diagram of hitching multiple loading plates according to another embodiment of the present disclosure.
FIG. 12 is a structural schematic diagram of stacking multiple loading plates.

### DETAILED DESCRIPTION

In order to make the technical solutions and advantages of the present disclosure clearer, the embodiments of the present disclosure will be further detailed below.

In the related arts, an article transfer device includes an unloader, a lifter and a conveyer. The unloader includes multiple storage layers. Due to positions of the multiple storage layers are fixed, the multiple storage layers cannot directly dock with a conveying belt. In this case, a conveyer may be used to dock with the conveying belt. Because positions of the unloader and the conveyer are fixed and cannot be moved, articles can be transferred between the unloader and the conveyer by using a freely-moving lifter, so as to transfer the articles between a material box robot and the conveying belt.

However, each of the above devices such as the conveyer, the lifter and the unloader may occupy a certain space, and the article transfer device occupies a large space, leading to a low space utilization rate.

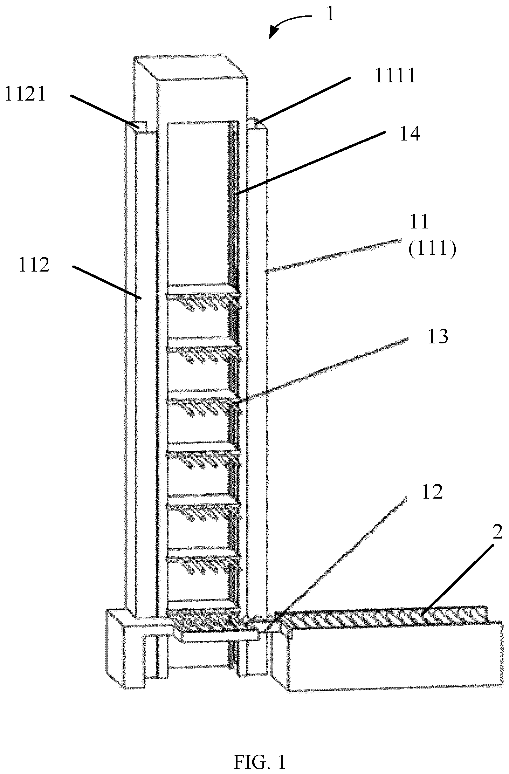

An embodiment of the present disclosure provides an article transfer device 1. As shown in FIG. 1, the article transfer device 1 includes: a machine frame 11, a lift assembly 14, a conveying platform 12 and multiple loading plates 13. The multiple loading plates 13 are connected with the machine frame 11 through the lift assembly 14, and the conveying platform 12 is at a bottom of a machine chamber of the machine frame 11. Each loading plate 13 is provided with a first comb structure including multiple first loading rods 131, and the conveying platform 12 is provided with a second comb structure including multiple second loading rods 121 and matching the first comb structure. The multiple loading plates 13 being connected with the machine frame 11 through the lift assembly 14 includes: the multiple loading plates 13 are inside the machine chamber of the machine frame 11 through the lift assembly 14, and the conveying platform 12 is at the bottom of the machine frame 11, or the multiple loading plates 13 are at an outer side of the machine frame 11 through the lift assembly 14, and correspondingly, the conveying platform 12 is at a side of the bottom of the machine frame 11.

When articles are transferred by using the article transfer device 1, the lift assembly 14 is configured to control the multiple loading plates 13 to move along a direction perpendicular to the conveying platform, and the first comb structures of the multiple loading plates 13 run through a plane where the second comb structure of the conveying platform 12 is located, and thus, the multiple loading plates 13 can perform article exchange with the conveying platform 12.

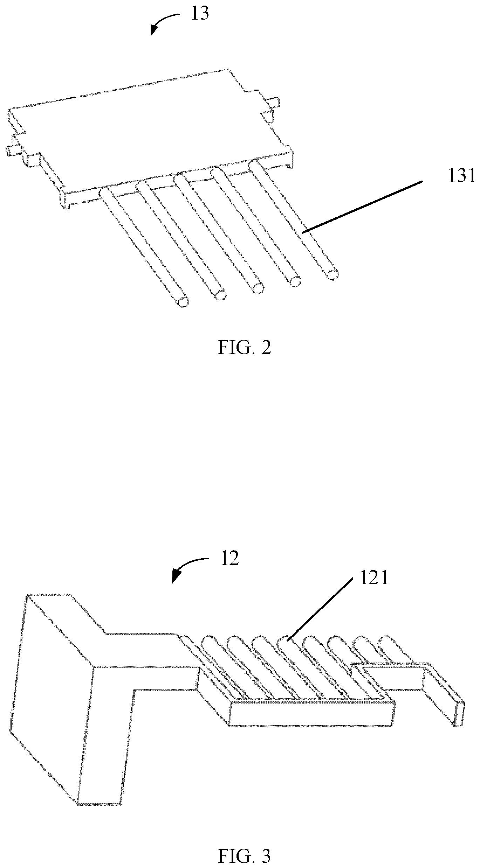

Each loading plate 13 is provided with a first comb structure, and the first comb structure includes multiple first loading rods 131. A number of the multiple first loading rods 131 may be set and changed based on requirements, for example, the number of the first loading rods 131 is 5 as shown in FIG. 2.

A length of a first loading rod 131 may be set and changed based on requirements, for example, the length of the first loading rod 131 may be 30 centimeters to 50 centimeters. A diameter of the first loading rod 131 may be set and changed based on requirements, for example, the diameter of the first loading rod 131 may be 2 centimeters to 5 centimeters. A material of the first loading rods 131 may be set and changed based requirements, for example, the material of the first loading rods 131 may be cast iron or an alloy, where the alloy may be stainless steel.

The conveying platform 12 is provided with a second comb structure matching the first comb structure. The second comb structure includes multiple second loading rods 121 as shown in FIG. 3. The number, the length, the diameter, and the material of the multiple second loading rods 121 all can be set and changed based on requirements, which is not limited in the embodiments of the present disclosure.

In one embodiment of the present disclosure, when the first comb structure including multiple first loading rods 131 runs through a plane where the second comb structure of the conveying platform 12 is located, the first comb structure can not only transfer articles to the conveying platform 12 but also receive articles transferred from the conveying platform 12, so as to achieve article exchange with the conveying platform 12. Furthermore, the first comb structure and the second comb structure have the advantages of simple structure, small occupation area and low costs.

In some embodiments, two adjacent first loading rods 131 are arranged in a first preset spacing, and two adjacent second loading rods 121 are arranged in a second preset spacing.

In this implementation, the first preset spacing may be equal or unequal to the second preset spacing. If the first preset spacing is equal to the second preset spacing, the first preset spacing and the second preset spacing may be any value, for example, the first preset spacing and the second preset spacing may be 10 centimeters or 20 centimeters. In this case, one first loading rod 131 runs through a middle position between two adjacent second loading rods 121.

If the first preset spacing is unequal to the second preset spacing, the first preset spacing may be greater than or less than the second preset spacing. For example, the first preset spacing is less than the second preset spacing, the first preset spacing may be 10 centimeters and the second preset spacing may be 11 centimeters or 12 centimeters. For example, the first preset spacing is greater than the second preset spacing, the second preset spacing is 10 centimeters and the first preset spacing may be 11 centimeters or 12 centimeters. In this case, one first loading rod 131 runs through a non-middle position between two adjacent second loading rods 121.

In some embodiments, a height of the machine frame 11 may be set and changed based on requirements, which is not limited in the embodiments of the present disclosure. For example, the height of the machine frame 11 may be 1.5 meters to 2 meters.

In some embodiments, a material of the machine frame 11 may be set and changed based on requirements, which is not limited in the embodiments of the present disclosure. For example, the material of the machine frame 11 may be cast iron or an alloy, where the alloy may be stainless steel.

In some embodiments, locking universal wheels may be provided at the bottom of the machine frame 11 to achieve free movement and stop in time upon arrival at a preset position, and then article exchange is performed.

A number of the locking universal wheels can be set and changed based on requirements, which is not limited in the embodiments of the present disclosure. For example, the number of the locking universal wheels may be one or more.

In some embodiments, as shown in FIG. 2, both sides of the loading plates 13 are connected with the lift assembly 14. The lift assembly 14 can, during an un and down process, bring the loading plates 13 to move up and down along a direction perpendicular to the conveying platform.

In this implementation, the connection between both sides of the loading plates 13 with the lift assembly 14 may be set and changed based on requirements, for example, may be detachable connection or fixed connection. The detachable connection may be, for example, tenon-and-mortise connection or thread connection, and the fixed connection may be, for example, welding connection.

In some embodiments, a material of the loading plates 13 may be set and changed based on requirements, for example, the material of the loading plates 13 may be timber, cast iron or alloy. If the material of the loading plates 13 is timber, the above connection may be tenon-and-mortise connection, and if the material of the loading plates 13 is cast iron or alloy, the above connection may be thread connection.

In some embodiments, a thickness of a loading plate 13 may be set and changed based on requirements, which is not limited in the embodiments of the present disclosure. For example, the thickness of the loading plate 13 may be 1 centimeter to 2 centimeters.

In some embodiments, a number of the loading plates 13 may be set and changed based on requirements, for example, the number of the loading plates 13 may be 6 to 8 or more. In the embodiments of the present disclosure, descriptions are made using the same number of the loading plates 13 as the number of article storage positions in an article storage mechanism (e.g., a material box robot). If the number of the article storage positions in the article storage mechanism is 6, the number of the loading plates 13 is 6; if the number of the article storage positions in the article storage mechanism is 8, the number of the loading plates 13 is 8. With this disposal, the loading plates 13 can take away the articles at all the article storage positions in the article storage mechanism at the same time, or the articles on all the loading plates 13 can be placed at all the article storage positions in the article storage mechanism at the same time, so as to reduce the time of occupying the article storage mechanism and improve the article exchange efficiency.

In some embodiments, two adjacent loading plates 13 in the multiple loading plates may be connected together by hitching connection.

In some embodiments, two adjacent loading plates in the multiple loading plates may include a first loading plate and a second loading plate; the first loading plate includes a loading plate body, the loading plate body is transversely provided with a first comb structure, and is vertically provided with a direction guiding structure, where a position limiter is provided at an end of the direction guiding structure away from the loading plate body; the second loading plate is provided with a hitching portion, the first loading plate is under the second loading plate, and the first loading plate may be hitched to the hitching portion of the second loading plate by the position limiter of the first loading plate. The hitching portion of the second loading plate may be inside the direction guiding structure of the first loading plate, such that the second loading plate can move up and down along the direction guiding structure of the first loading plate, for example, slide up and down or roll up and down.

When the articles are exchanged from the loading plates 13 to the conveying platform 12, after the first loading plate drops to a first predetermined position below the conveying platform, the first loading plate stops dropping upon being supported on the ground or on a support component or on another loading plate under the first loading plate. The second loading plate drops until it stacks on the first loading plate.

The first loading plate may drop with its dead weight. When the first loading plate stops dropping, the second loading plate continues dropping. At this time, the hitching portion of the second loading plate is separated from the position limiter of the first loading plate, and the second loading plate moves down along the direction guiding structure of the first loading plate until the second loading plate drops onto the first loading plate. The second loading plate may drop and stack on the first loading plate, such that a space between the first second loading plate and the first loading plate becomes more compact, reducing the occupied stereoscopic space.

After the first loading plate stops dropping, when the second loading plate continues dropping until it stacks on the first loading plate, a distance between the second loading plate and the first loading plate is changed from large to small until the second loading plate stacks on the first loading plate.

When the articles are exchanged from the conveying platform 12 to the loading plates 13, after the second loading plate moves to a second predetermined position from bottom up, the hitching portion of the second loading plate is hitched to the position limiter of the first loading plate, and the second loading plate continues moving up, and drives the first loading plate to move up by the hitching portion of the second loading plate.

After the second loading plate stacks on the first loading plate, if the second loading plate is lifted upward (for example, lifted under the traction of another loading plate above the second loading plate), the hitching portion of the second loading plate is moved up or rolled up along the direction guiding structure of the first loading plate during the process of lifting the second loading plate. After the second loading plate moves to the second predetermined position from bottom up, for example, moves to a second predetermined position above the conveying platform, the hitching portion of the second loading plate is hung/hitched to the position limiter of the first loading plate, and the second loading plate continues moving up and drives the first loading plate to move up by the hitching portion of the second loading plate.

During the process that the second loading plate is gradually ascending from a stacking position on the first loading plate until the second loading plate is hitched to the first loading plate and ascending together with the first loading plate, a vertical distance between the second loading plate and the first loading plate changes from small to large until a maximum distance value therebetween is reached.

The first loading plate is named relative to the second loading plate. In multiple loading plates, any two adjacent loading plates are called the first loading plate and the second loading plate, where the loading plate located below is referred to as the first loading plate and the loading plate located above is referred to as the second loading plate.

Two adjacent loading plates in the multiple loading plates may be connected by the above hitching manner used between the first loading plate and the second loading plate. In this way, the loading plates can be stacked below the conveying platform, reducing the space occupation.

When the above hitching manner of connecting the first loading plate and the second loading plate is used for the multiple loading plates, topmost loading plate may not be provided with the direction guiding structure but directly connected with the lift assembly.

The lift assembly may include a drive mechanism and a traction member connected with the drive mechanism. The traction member may be connected with the topmost loading plate in the multiple loading plates. The drive mechanism may include a motor and a speed reducer connected with the motor and the like. The traction member may be a flexible rope, chain, belt or the like connected with the drive mechanism. In other embodiments, each loading plate may also be hung to a flexible traction member.

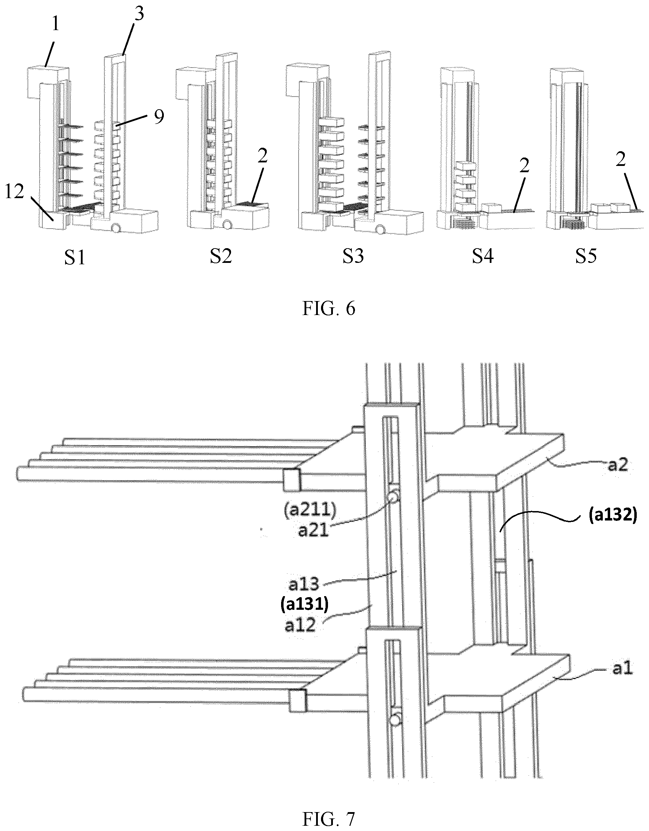

FIG. 7 is a structural schematic diagram of mutually hitching two adjacent loading plates according to embodiments of the present disclosure.

The multiple loading plates may include a first loading plate a1 and a second loading plate a2, where the first loading plate a1 is hitched under the second loading plate a2.

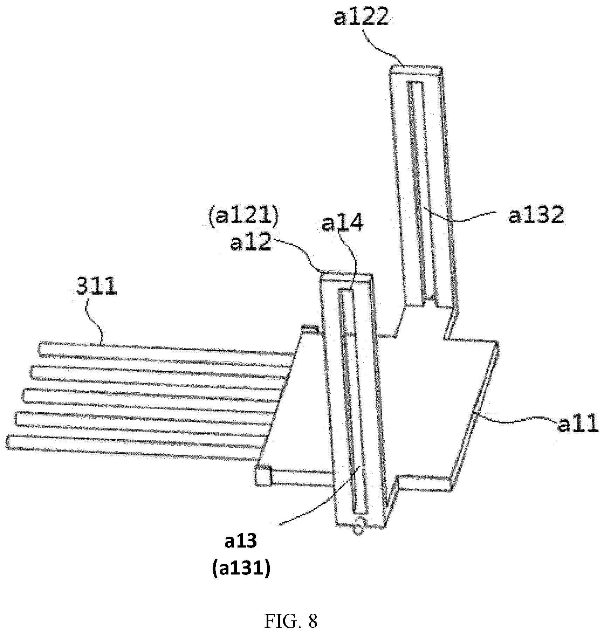

FIG. 8 is a structural schematic diagram illustrating the first loading plate a1 in FIG. 7. As shown in FIG. 8, the first loading plate a1 includes a loading plate body a11, a first comb structure 311 is provided transversely on the loading plate body a11, and an elongated guiding member a12 is provided vertically on the loading plate body a11, where a guiding groove a13 is provided along a length direction of the guiding member a12 in the guiding member a12. A position limiter a14 is provided at a top end of the guiding groove a13.

The guiding member a12 is a guiding plate and the top end of the guiding groove a13 may be a closed end to form the position limiter a14. In other embodiments, the guiding member a12 may also be a guiding column.

As shown in FIG. 7, a hitching portion a21 is provided on the second loading plate a2, where the hitching portion a21 may be a columnar pin which can slide up and down along the guiding groove a13. A sleeve may be mounted on the hitching portion a21 to enable the hitching portion a21 to roll up and down along the guiding groove a13. In other examples, the hitching portion a21 may also be a block body such as a rectangular block or the like capable of sliding up and down along the guiding groove a13.

In this embodiment, if the first loading plate a1 is not a bottommost loading plate, a hitching portion may also be provided on the first loading plate to hitch another loading plate under the first loading plate. The first loading plate shown in FIG. 7 is not the bottommost loading plate in the multiple loading plates.

As shown in FIG. 8, in order to ensure the second loading plate a2 moves up and down stably, the guiding member a12 may include a first guiding member a121 and a second guiding member a122, where the first guiding member a121 and the second guiding member a122 are provided parallelly at both sides of the loading plate body a11 of the first loading plate a1; a first guiding groove a131 is provided along a length direction of the first guiding member a121, and a second guiding groove a132 is provided along a length direction of the second guiding member a122; the hitching portion a21 of the second loading plate a2 may include a first hitching portion a211 and a second hitching portion (not shown in FIG. 7), and the first hitching portion a211 and the second hitching portion are respectively at both sides of the second loading plate a2. The first hitching portion a211 of the second loading plate a2 is in the first guiding groove a131 of the first loading plate a1, and the second hitching portion of the second loading plate a2 is in the second guiding groove a132 of the first loading plate a1.

When the first loading plate a1 stops dropping and the second loading plate a2 continues dropping, the first guiding groove a131 and the second guiding groove a132 of the first loading plate a1 can provide guidance for both sides of the second loading plate a2, so as to reduce the occurrence of tilting or overturning of the second loading plate a2 during a dropping process.

When the second loading plate a2 is ascending from the stacking position on the first loading plate a1, the first guiding groove a131 and the second guiding groove a132 of the first loading plate a1 can provide guidance for both sides of the second loading plate a2 to prevent occurrence of tilting or overturning of the second loading plate a2 during an ascending process; after the second loading plate a2 ascends to the second predetermined position, the first hitching portion a211 and the second hitching portion at both sides of the second loading plate a2 are respectively hitched to the position limiters a14 at both sides of the first loading plate a1. Therefore, the second loading plate a2 can stably bring the first loading plate a1 to move up, reducing the occurrence of tilting or overturning of the first loading plate a1 during an ascending process.

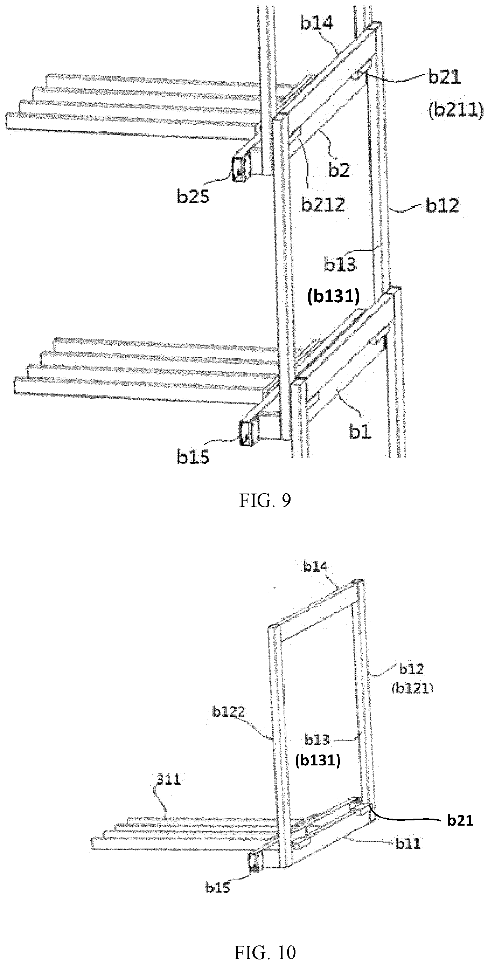

FIG. 9 is a structural schematic diagram of mutually hitching two adjacent loading plates according to another embodiment of the present disclosure. As shown in FIG. 9, multiple loading plates may include a first loading plate b1 and a second loading plate b2, where the first loading plate b1 is hitched under the second loading plate b2.

FIG. 10 is a structural schematic diagram illustrating the first loading plate b1 in FIG. 9. As shown in FIG. 10, a direction guiding structure is provided vertically on a loading plate body b11 of the first loading plate b1, and the direction guiding structure may include an elongated guiding member b12, where a guiding surface b13 is provided along a length direction of the guiding member b12; a position limiter b14 is provided at the top end of the guiding surface b13.

As shown in FIG. 9, a hitching portion b21 is provided on the second loading plate b2, and the hitching portion b21 is a rectangular block; the hitching portion b21 of the second loading plate b2 mates with the guiding surface b 13 of the first loading plate b1, such that the second loading plate b2 can move up and down, for example, slide up and down, along the guiding surface b 13 of the first loading plate b1. Alternatively, a rolling body such as a rolling ball or the like may be provided on the hitching portion b21 of the second loading plate b2, such that the hitching portion b21 of the second loading plate b2 can roll up and down along the guiding surface b 13 of the first loading plate b1.

As shown in FIG. 10, the guiding member b12 of the first loading plate b1 may be a guiding column, and the guiding surface b13 may be a vertical side surface of the guiding column. The position limiter b 14 may be a limiting block at the top end of the guiding surface b13. In other examples, the guiding member b12 may also be a guiding plate and the hitching portion b21 may be a block body of other shapes.

As shown in FIG. 9 and FIG. 10, in order to ensure the second loading plate b2 moves up and down stably, the guiding member b12 includes a third guiding member b121 and a fourth guiding member b122. The third guiding member b121 and the fourth guiding member b 122 are provided parallelly at both sides of the loading plate body b 11 of the first loading plate b1, and a position limiter b14 is provided at the top ends of the third guiding member b121 and the fourth guiding member b122, where the position limiter b14 is formed by a cross beam connected with the top ends of the third guiding member b121 and the fourth guiding member b122.

A first guiding surface b131 is provided along a length direction of the third guiding member b121, and a second guiding surface (not shown in FIG. 9) is provided along a length direction of the fourth guiding member b122; the hitching portion b21 of the second loading plate b2 includes a third hitching portion b211 and a fourth hitching portion b212, where the third hitching portion b211 and the fourth hitching portion b212 are provided apart on the second loading plate b2. The third hitching portion b211 of the second loading plate b2 mates with the first guiding surface b131 of the first loading plate b1, such that the second loading plate b2 can move up and down, for example, slide up and down, along the first guiding surface b131 of the first loading plate b1; the fourth hitching portion b212 of the second loading plate b2 mates with the second guiding surface of the first loading plate b1, such that the second loading plate b2 can slide up and down along the second guiding surface of the first loading plate b1.

When the first loading plate b1 stops dropping and the second loading plate b2 continues dropping, the second loading plate b2 can be guided by the first guiding surface b13 and the second guiding surface of the first loading plate b1 to reduce occurrence of tilting or overturning of the second loading plate b2 during a dropping process.

When the second loading plate b2 is ascending from the stacking position on the first loading plate b1, the second loading plate b2 can be guided by the first guiding surface b13 and the second guiding surface of the first loading plate b1 to prevent occurrence of tilting or overturning of the second loading plate b2 during an ascending process; after the second loading plate b2 ascends to the second predetermined position, the third hitching portion b211 and the fourth hitching portion b212 of the second loading plate b2 are respectively hitched to the position limiter b14 at both sides of the first loading plate b1, so as to stably bring the first loading plate b1 to move up, reducing the occurrence of tilting or overturning of the first loading plate b1 during an ascending process.

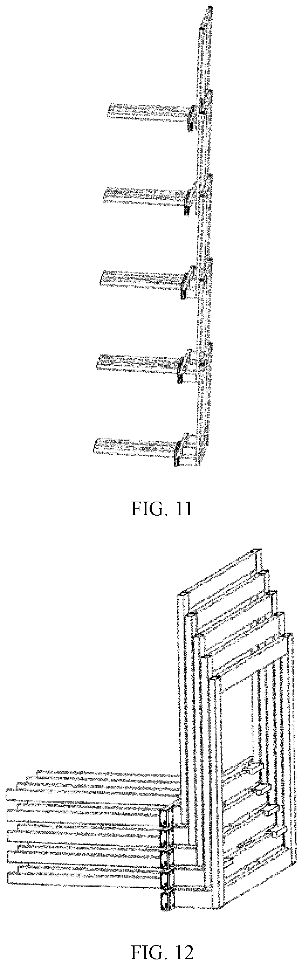

FIG. 11 is a structural schematic diagram of hitching multiple loading plates in embodiments, and FIG. 12 is a structural schematic diagram of stacking multiple loading plates.

In order to ensure more stable operation of the loading plates, the machine frame 11 may guide the movement of the loading plates during a dropping or ascending process of the loading plates 13. In some embodiments, as shown in FIG. 1, the machine frame 11 includes a first column 111 and a second column 112. The first column 111 and the second column 112 are in parallel, and a machine chamber is formed between the first column 111 and the second column 112. A third guiding groove 1111 is provided along a length direction of the first column 111 in the first column 111; a fourth guiding groove 1121 is provided along a length direction of the second column 112 in the second column 112; the third guiding groove 1111 is opposite to the fourth guiding groove 1121. A first protrusion portion is provided at a first side of the first loading plate (a1 or b 1) and/or the second loading plate (a2 or b2), and a second protrusion portion is provided at a second side of the first loading plate and/or the second loading plate. The first protrusion portion is in the third guiding groove 1111, and can drive the first loading plate and/or the second loading plate to move up and down, for example, slide or roll up and down, along the third guiding groove 1111; the second protrusion portion is in the fourth guiding groove 1121, and can drive the first loading plate and/or the second loading plate to move up and down, for example, slide or roll up and down, along the fourth guiding groove 1121.

The first protrusion portion and the second protrusion portion may be a column body or block body or the like.

In the embodiments shown in FIG. 7 and FIG. 8, the first protrusion portion and the second protrusion portion include the first hitching portion a211 and the second hitching portion (not shown in FIG. 7) provided at both sides of the second loading plate a2. In this case, an end of the first hitching portion a211 of the second loading plate a2 is outside the first guiding groove a131 of the first loading plate a1 and inside the third guiding groove 1111, such that the second loading plate a2 can move up and down, for example, slide or roll up and down, along the third guiding groove 1111; an end of the second hitching portion is outside the second guiding groove a132 and inside the fourth guiding groove 1121, such that the second loading plate a2 can move up and down, for example, slide or roll up and down, along the fourth guiding groove 1121. Thus, with the first hitching portion a211 and the second hitching portion, the second loading plate a2 can not only hitch the first loading plate a1 but also achieve up-down movement, for example, slide or roll, in the guiding grooves in the first column 111 and the second column 112, ensuring more stable up-down movement of the first loading plate a1 and the second loading plate a2.

The first protrusion portion and the second protrusion portion may include the first hitching portion and the second hitching portion at both sides of the first loading plate. The first hitching portion and the second hitching portion at both sides of the first loading plate are used to hitch another loading plate under the first loading plate.

In the embodiments shown in FIG. 9 to FIG. 12, the first protrusion portion and the second protrusion portion at both sides of the loading plates include protrusion blocks b15 at both sides of the loading plate body of the first loading plate and protrusion blocks b25 at both sides of the loading plate body of the second loading plate.

In some embodiments, with continued reference to FIG. 3, the height of the conveying platform 12 may be set and changed based on requirements, for example, the height of the conveying platform 12 is equal to a height of a conveying device 2 shown in FIG. 1. If the height of the conveying device 2 is 1 meter, the height of the conveying platform 12 is also 1 meter; if the height of the conveying device 2 is 1.2 meters, the height of the conveying platform 12 is also 1.2 meters. This disposal facilitates article exchange between the conveying platform 12 and the conveying device 2, namely, the conveying platform 12 can transfer articles to the conveying device 2, and the conveying device 2 can also transfer articles to the conveying platform 12.

In some embodiments, the connection between the conveying platform 12 and the machine chamber of the machine frame 11 may be set and changed based on requirements, for example, the connection between the conveying platform 12 and the machine chamber of the machine frame 11 is a fixed connection, for example, welding connection; or, the conveying platform 12 is clamped at both sides of the machine chamber; or, the conveying platform 12 may be detachably connected at both sides of the machine chamber.

In some embodiments, the material of the conveying platform 12 may be set and changed based on requirements, which is not limited in the embodiments of the present disclosure. For example, the material of the conveying platform 12 is cast iron or alloy, where the alloy may be stainless steel.

In some embodiments, the lift assembly 14 is inside the machine chamber of the machine frame 11 and may be fixedly connected with the machine frame 11, which helps to maintain the stability of the machine frame 11 during an article transfer process, and improve the safety in this article transfer process.

The lift assembly 14 may be a lift or another component capable of achieving moving up-and-down function, which is not limited in the embodiments of the present disclosure.

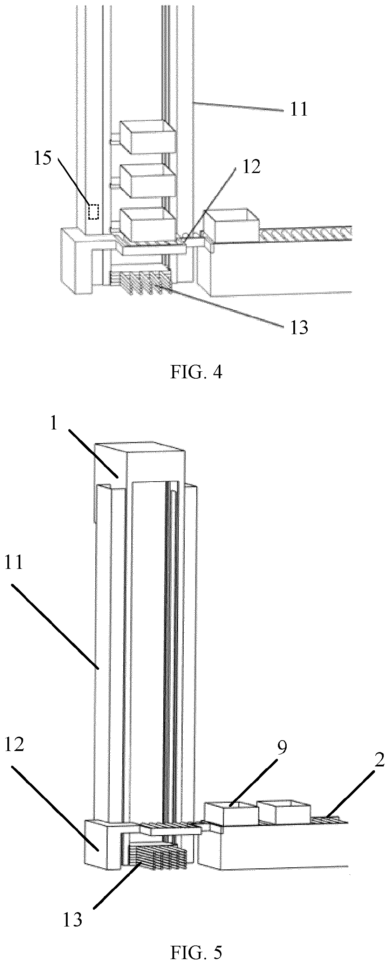

In an embodiment of the present disclosure, with reference to FIG. 4 and FIG. 6, when the article transfer device 1 is to transfer articles to the conveying device 2, multiple loading plates 13 receive articles from the article storage mechanism 3 as shown by S1 to S3 in FIG. 6. At this time, the multiple loading plates 13 are all above the conveying platform 12. At this time, the lift assembly 14 controls the loading plates 13 to move down as shown by S4 in FIG. 6. The first comb structures of the loading plates 13 run through the plane where the second comb structure of the conveying platform 12 is located. When the first comb structures run through the plane where the second comb structure is located, the articles 9 are transferred from multiple first loading rods 131 to multiple second loading rods 121 of the conveying platform 12, so as to transfer the articles to the conveying platform 12. Then, the conveying platform 12 transfers the articles to the conveying device 2 as shown by S4 to S5 in FIG. 6. In this case, for each loading plate 13, the loading plate 13 moves from above the conveying platform 12 to below the conveying platform 12, and the lift assembly 14 can control the loading plate 13 to run through the plane where the conveying platform 12 is located to the bottom of the machine chamber of the machine frame 11 and then stop moving, and the multiple loading plates 13 are stacked below the conveying platform 12, reducing the space size, as shown in FIG. 5. Then, the lift assembly 14 controls multiple loading plates 13 to move up from below the conveying platform 12. Upon reaching a set position, the multiple loading plates 13 receive articles from the article storage mechanism 3 again and then continue performing article exchange with the conveying platform 12 as above-mentioned.

When the article transfer device 1 receives the articles transferred from the conveying device 2, multiple loading plates 13 are all below the conveying platform 12, the conveying platform 12 receives the articles 9 from the conveying device 2, and the lift assembly 14 controls the multiple loading plates 13 to sequentially move up from below the conveying platform 12. When the loading plates 13 move up, the first comb structures run through the plane where the second comb structure is located, and the articles 9 are transferred by multiple second loading rods 121 to multiple first loading plates 131, and the loading plates 13 can receive the articles from the conveying platform 12. Moreover, the multiple loading plates 13 are gradually dispersed from the stacked state, and the article storage mechanism 3 takes away the articles from respective loading plates 13. The lift assembly 14 can control the multiple loading plates 13 to move down from above the conveying platform 12. Thereafter, the multiple loading plates 13 can receive articles from the conveying platform 12 again, and continue transferring the articles to the article storage mechanism 3 as above-mentioned.

The article transfer device 1 may firstly transfer articles to the conveying device 2 and then receive other articles from the conveying device 2. For ease of distinguishment, the articles transferred by the article transfer device 1 to the conveying device 2 are referred to first articles and other articles received by the article transfer device 1 from the conveying device 2 are referred to as second articles. The lift assembly 14 controls the loading plates 13 to move down, the first comb structures run through the plane where the second comb structure is located, the first articles are transferred from multiple first loading rods 131 to multiple second loading rods 121 of the conveying platform 12, and thus the article transfer device 1 transfers the first articles to the conveying platform 12 and the conveying platform 12 then transfers the first articles to the conveying device 2. In this case, the lift assembly 14 controls the multiple loading plates 13 to run from top down through the plane where the conveying platform 12 is located, move to the bottom of the machine chamber, and then stop moving, the multiple loading plates 13 are stacked below the conveying platform 12. When the conveying platform 12 receives the second articles from the conveying device 2, the lift assembly 14 controls the loading plates 13 to move up, and the first comb structures run through the plane where the second comb structure is located, and thus the articles are transferred from multiple second loading rods 121 to multiple first loading rods 131. In this way, the second articles are received from the conveying platform 12.

In a case that the article transfer device 1 receives the second articles from the conveying device 2 and transfers the first articles to the conveying device 2, the process is similar to the above and will not be repeated herein.

For the article transfer device 1 provided by the embodiments of the present disclosure, each loading plate 13 of the article transfer device is provided with a first comb structure 131 and the conveying platform 12 is provided with a second comb structure 121 matching the first comb structure 131. When the article transfer device transfers articles, multiple loading plates 13 move along a direction perpendicular to the conveying platform 12 and the first comb structure 131 of each loading plate 13 runs through the plane where the second comb structure 121 of the conveying platform 12 is located. In this way, articles on the loading plates 13 can be transferred to the conveying platform 12 or articles can be received from the conveying platform 12, so as to achieve article exchange between the article transfer device 1 and the conveying platform 12. It can be seen that the multiple loading plates 13 in the article transfer device all move up and down along a direction perpendicular to the conveying platform 12, and will not occupy horizontal space, thereby reducing occupation space, saving the space and improving the space utilization rate.

It should be noted that the articles in the embodiments of the present disclosure may be regular articles or irregular articles, for example, may be apparels, daily necessities or other articles, which is not limited herein. Furthermore, the articles may be placed directly on the loading plates 13 or placed on the loading plates 13 through a loading box, which is not limited in the embodiments of the present disclosure.

In some embodiments, for each first loading rod 131, the first loading rod 131 may be a telescopic rod. When each loading plate 13 runs through the plane where the conveying platform 12 is located to transfer an article to the conveying platform 12, the lift assembly 14 controls multiple telescopic rods of the loading plate 13 to retract, and controls the loading plate 13 to move down; when each loading plate 13 runs through the plane where the conveying platform 12 is located to receive an article from the conveying platform 12, the lift assembly 14 controls multiple telescopic rods of the loading plate 13 to extend, and controls the loading plate 13 to move up.

In this embodiment, if multiple loading plates 13 transfer articles to the conveying platform 12, the multiple loading plates 13 firstly receive articles from the article storage mechanism 3. At this time, the multiple loading plates 13 are all above the conveying platform 12, and the multiple telescopic rods of each loading plate 13 are in an extended state. For each loading plate 13, the lift assembly 14 can control the multiple telescopic rods of the loading plate 13 to move down and control the multiple telescopic rods to retract when the loading plate 13 moves until a distance between the loading plate 13 and the conveying platform 12 reaches a preset distance. Thus, the article on the multiple telescopic rods will drop onto the conveying platform 12, so as to transfer the article from the loading plate to the conveying platform 12. After the loading plate 13 transfers the article to the conveying platform in this way, the lift assembly 14 may control the loading plate 13 to continue moving down until the loading plate 13 moves to the bottom of the machine chamber of the machine frame 11 and stops moving. In this case, the multiple loading plates 13 are stacked below the conveying platform 12, reducing the space size. After multiple loading plates 13 transfer articles to the conveying platform 12, the lift assembly 14 may control the multiple loading plates 13 to move up from below the conveying platform 12. After topmost loading plate 13 reaches a preset position, the lift assembly 14 controls multiple telescopic rods of each loading plate 13 to extend, and thus the multiple loading plates 13 can receive articles from the article storage mechanism 3 again and continue transferring the articles to the conveying platform 12 as above-mentioned.

If multiple loading plates 13 receive articles from the conveying platform 12, the multiple loading plates 13 are all below the conveying platform 12. The conveying platform 12 receives articles from the conveying device 2, and the lift assembly 14 controls the multiple loading plates 13 to sequentially move up from below the conveying platform 12, and controls each telescopic rod of each loading plate 13 to extend. When the loading plates 13 move up, the multiple telescopic rods of each loading plate 13 all run through the plane where the conveying platform 12 is located, and the articles are transferred by multiple second loading rods 121 to multiple telescopic rods of the loading plates 13. In this way, the loading plates 13 receive the articles from the conveying platform 12. Furthermore, the multiple loading plates 13 are gradually dispersed from the stacked state. When the topmost loading plate reaches a preset position and then stops moving, the article storage mechanism 3 takes away the article on each loading plate 13, and then the lift assembly 14 controls each telescopic rod of each loading plate 13 to retract, and controls each loading plate 13 to move down and then continue receiving articles from the conveying platform 12 as above.

The multiple loading plates 13 may firstly transfer articles to the conveying platform 12 and then receive other articles from the conveying platform 12. For ease of distinguishment, the articles transferred by the loading plates 13 to the conveying platform 12 are referred to as first articles and other articles received by the loading plates 13 from the conveying platform 12 are referred to as second articles. When the multiple loading plates 13 transfer the first articles to the conveying platform 12, the lift assembly 14 controls multiple telescopic rods of each loading plate 13 to move down, and controls the multiple telescopic rods of the loading plate 13 to retract when the loading plate 13 moves until a distance between the loading plate and the conveying platform 12 reaches a preset distance. Thus, the first articles on the multiple telescopic rods of the loading plates 13 will fall onto the conveying platform 12, thus achieving the transfer of the first articles from the loading plates 13 to the conveying platform 12. The lift assembly 14 controls the loading plates 13 to continue moving down until the loading plates 13 move to the bottom of the machine chamber of the machine frame 11 and stop moving, and hence, the multiple loading plates 13 are stacked below the conveying platform 12. When the multiple loading plates 13 receive the second articles from the conveying platform 12, the conveying platform 12 receives the second articles from the conveying device 2, and the lift assembly 14 controls the multiple loading plates 13 to move up and controls each telescopic rod of the loading plates 13 to extend. When the loading plates 13 move up, the multiple telescopic rods of each loading plate 13 all run through the plane where the conveying platform is located, and thus the articles are transferred by multiple second loading rods121 to multiple telescopic rods of the loading plates 13. In this way, the second articles are received from the conveying platform 12. Furthermore, the multiple loading plates 13 are gradually dispersed from the stacked state. When the topmost loading plate reaches the preset position and then stops moving, the article storage mechanism 3 takes away the second article on each loading plate 13. Afterwards, the multiple loading plates 13 and the conveying platform 12 can continue performing article exchange as above-mentioned.

When the multiple loading plates 13 firstly receive articles from the conveying platform 12 and then transfer articles to the conveying platform 12, the process is similar to the above and will not be repeated herein.

It should be noted that a sensor, for example, a distance sensor, may be provided inside each loading plate 13, and the lift assembly 14 may sense a distance between the loading plate 13 and the conveying platform 12 by using the sensor. The loading plate 13 may move down until the distance between the loading plate 13 and the conveying platform 12 reaches a preset distance, where the preset distance may be set and changed based on requirements, for example, the preset distance may be 1 centimeter to 2 centimeters. When the distance sensor in a loading plate 13 senses that the loading plate 13 moves down until the distance between the loading plate 13 and the conveying platform 12 reaches the preset distance, the loading plate 13 may send a retraction signal to the lift assembly 14, and the lift assembly 14, in response to receiving the retraction signal, communicates with the loading plate 13 to retract the first loading rods.

In an embodiment of the present disclosure, the retraction and extension of the first loading rods 131 can be flexibly controlled by the lift assembly 14, so as to achieve article exchange between the loading plates 13 and the conveying platform 12 during retraction and extension. In this way, the occupation space of the loading plates 13 can be minimized and the article exchange efficiency can be improved.

In some embodiments, for each first loading rod 131, with continued reference to FIG. 2, the first loading rod 131 may be a non-telescopic rod. When each loading plate 13 runs through the plane where the conveying platform 12 is located to transfer an article to the conveying platform 12, the lift assembly 14 is configured to control multiple non-telescopic rods of each loading plate 13 to move down through multiple second loading rods 121. When each loading plate 13 runs through the plane where the conveying platform 12 is located to receive an article from the conveying platform 12, the lift assembly 14 is configured to control multiple non-telescopic rods of each loading plate 13 to move up through the plane where the conveying platform 12 is located.

In an embodiment of the present disclosure, multiple first loading rods 131 and multiple second loading rods 121 are alternately disposed. When the loading plates 13 and the conveying platform 12 are in a same plane, multiple first loading rods 131 and multiple second loading rods 121 are alternated such that the multiple first loading rods 131 can smoothly run through the multiple second loading rods 121. When the multiple first loading rods 131 run through the multiple second loading rods 121, article exchange between the loading plates 13 and the conveying platform 12 can be achieved. With this arrangement, the structure is simplified and the article exchange efficiency is improved.

In some embodiments, with continued reference to FIG. 4, the article transfer device 1 further includes: a control mechanism 15. The control mechanism 15 is connected with the machine frame 11, for example, disposed inside the machine frame 11 or disposed at an outer side of the machine frame 11. The control mechanism 15 is configured to control multiple second loading rods 121, multiple loading plates 13 and the conveying device 2 for conveying articles to perform article exchange.

In this embodiment, the control mechanism 15 may control the rotation of multiple second loading rods 121, so as to perform article exchange with the conveying device 2 during the rotation of the multiple second loading rods 121. The control mechanism 15 may be set and changed based on requirements, for example, the control mechanism 15 may include a drive motor.

In an embodiment of the present disclosure, the control mechanism 15 can flexibly control the conveying platform 12 to perform article exchange with the conveying device 2, improving the article exchange efficiency.

In some embodiments, for each second loading rod 121 of the conveying platform 12, the second loading rod 121 may be a rotatable rod. The control mechanism 15 is configured to control the rotation of the rotatable rods of the conveying platform 12, so as to perform article exchange with the conveying device 2 during the rotation of the rotatable rods.

In this embodiment, if the conveying platform 12 transfers articles to the conveying device 2, the control mechanism 15 can control the rotatable rods of the conveying platform 12 to rotate in a first direction, and during the rotation of the rotatable rods of the conveying platform 12, the articles are transferred to the conveying device 2. If the conveying device 2 transfers articles to the conveying platform 12, the control mechanism 15 can control the rotatable rods of the conveying platform 12 to rotate in a second direction, and during the rotation, the conveying platform 12 receives the articles from the conveying device 2. The first direction and the second direction are opposite directions and the rotatable rods may be rollers.

In an embodiment of the present disclosure, the rotatable rods can perform article exchange with the conveying device 2 during rotation, thus improving the article exchange efficiency.

In some embodiments, for each second loading rod 121 of the conveying platform 12, the second loading rod 121 may be a telescopic rod. When each loading plate 13 runs through the plane where the conveying platform 12 is located and performs article exchange with the conveying platform 12, the control mechanism 15 is configured to control the telescopic rods of the conveying platform 12 to extend or retract. Further, the control mechanism 15 is configured to control the rotation of the telescopic rods of the conveying platform 12, so as to perform article exchange with the conveying device 2 during the rotation of the telescopic rods of the conveying platform 12.

In this embodiment, the control mechanism 15 may control the extension and retraction of the telescopic rods of the conveying platform 12. If the loading plates 13 perform article exchange with the conveying platform 12, the control mechanism 15 may control the telescopic rods of the conveying platform 12 to extend. Thus, when multiple first loading rods 131 run through the telescopic rods, the articles can be transferred from the multiple first loading rods 131 of the loading plates 13 to the multiple second loading rods 121 of the conveying platform 12, or transferred from the multiple second loading rods 121 of the conveying platform 12 to the multiple first loading rods 131 of the loading plates 13, achieving article exchange between the loading plates 13 and the conveying platform 12. After the article exchange is completed, the control mechanism 15 may control the telescopic rods of the conveying platform 12 to retract. Furthermore, if the conveying platform 12 performs article exchange with the conveying device 2, the control mechanism 15 may control the telescopic rods of the conveying platform 12 to rotate, and during the rotation of the telescopic rods of the conveying platform 12, transfer articles to the conveying device 2 or receive articles from the conveying device 2.

In an embodiment of the present disclosure, when article exchange is performed, the telescopic rods of the conveying platform 12 are in an extended state, and when the conveying platform 12 performs article exchange with the conveying device 2, the telescopic rods of the conveying platform 12 are also in a rotation state. When the article exchange is completed or article exchange is not performed, the telescopic rods of the conveying platform 12 are in a retracted state. The state of the telescopic rods of the conveying platform 12 may be changed based on article exchange requirements, which not only improves the article exchange efficiency but also enriches the article exchange forms.

Furthermore, the second loading rods 121 of the conveying platform 12 may be rotatable rods or telescopic rods. Therefore, the second loading rods 121 can be disposed flexibly, improving the external expression of the article transfer device 1.

In some embodiments, a baffle plate may be provided at a side of the conveying platform 12 away from the loading plates 13 to prevent the articles from falling off, improving the safety of the article exchange process.

In some embodiments, a pressure sensor may be provided inside each loading plate 13. When the pressure sensor detects an article is placed on the loading plate 13, the pressure sensor may send a signal to the lift assembly. The lift assembly 14 receives this signal and controls the loading plate 13 to move up or down.

In this embodiment, only when the pressure sensor inside a loading plate 13 detects that an article is placed on the loading plate 13 can the lift assembly 14 control the loading plate 13 to move. In this way, it is avoided that the loading plates 13 without any article are always in an idle running state, leading to resource waste.

For the article transfer device 1 provided by the embodiments of the present disclosure, each loading plate 13 of the article transfer device 1 is provided with a first comb structure 131, and the conveying platform 12 is provided with a second comb structure 121 matching the first comb structure 131. When the article transfer device 1 transfers articles, multiple loading plates 13 move along a direction perpendicular to the conveying platform 12, and the first comb structure 131 of each loading plate 13 runs through the plane where the second comb structure 121 of the conveying platform 12 is located. In this way, articles on the loading plates 13 can be transferred to the conveying platform 12 or articles can be received from the conveying platform 12, so as to achieve article exchange between the article transfer device 1 and the conveying platform 12. It can be seen that the multiple loading plates 13 in the article transfer device 1 move up and down along a direction perpendicular to the conveying platform 12, and will not occupy horizontal space, thereby reducing occupation space, saving the space and improving the space utilization rate.

Furthermore, the multiple loading plates 13 are in a dispersed state when above the conveying platform 12. In this case, the multiple loading plates 13 can dock with the article storage mechanism 3 to take or place articles. The multiple loading plates 13 are in a stacked state when below the conveying platform 12. In this case, the conveying platform 12 can perform article exchange with the conveying device 2, and the articles are conveyed to a preset position by the conveying device 2, or the articles are sorted.

Furthermore, in an embodiment of the present disclosure, multiple loading plates 13, the conveying platform 12 and the machine frame 11 can be integrated into one article transfer device. By using the article transfer device, article transfer can be achieved between the article storage mechanism and the conveying device 2, so as to improve the article exchange efficiency. Further, the article transfer device features simple structure and low article transfer cost.

Furthermore, an embodiment of the present disclosure provides a warehousing system, which includes a conveying device 2, an article storage mechanism 3 and the above-mentioned article transfer device 1. The article transfer device 1 is connected with the conveying device 2, and the article transfer device 1 is configured to perform article exchange with the article storage mechanism 3 and the conveying device 2 respectively.

In an embodiment of the present disclosure, the article storage mechanism 3 can transfer articles to the conveying device 2 by the article transfer device 1, and the conveying device 2 can also transfer articles to the article storage mechanism 3 by the article transfer device 1.

For the warehousing system provided by the embodiments of the present disclosure, the article transfer device 1 is disposed between the article storage mechanism 3 and the conveying device 2, and by using this article transfer device 1, article transfer between the article storage mechanism 3 and the conveying device 2 can be achieved. Each loading plate 13 of the article transfer device 1 is provided with a first comb structure 131, and the conveying platform 12 is provided with a second comb structure 121 matching the first comb structure 131. When the article transfer device 1 transfers articles, multiple loading plates 13 move along a direction perpendicular to the conveying platform 12, and the first comb structure 131 of each loading plate 13 runs through the plane where the second comb structure 121 of the conveying platform 12 is located. In this way, articles on the loading plates 13 can be transferred to the conveying platform 12, or articles can be received from the conveying platform 12, so as to achieve article exchange between the article transfer device 1 and the conveying platform 12. It can be seen that the multiple loading plates 13 in the article transfer device 1 move up and down along a direction perpendicular to the conveying platform 12, and will not occupy horizontal space, thereby reducing occupation space, saving the space and improving the space utilization rate.

In some embodiments, the article storage mechanism 3 may be a material box robot.

The material box robot 3 has multiple article storage positions, on each of which an article can be placed. The number of the article storage positions in the material box robot is equal to the number of the loading plates 13 in the article transfer device 1. In this case, the material box robot 3 can place, at the same time, the articles on all the article storage positions onto the loading plates 13 of the article transfer device 1, and the article transfer device 1 can also place the articles on loading plates 13 onto the article storage positions of the material box robot, reducing the time of occupying the material box robot and improving the article exchange efficiency.

In some embodiments, the conveying device 2 may be a roller conveying line. This roller conveying line can transfer articles from the article storage mechanism 3 to the conveying platform 12 or transfer articles from the conveying platform 12 to the article storage mechanism 3, increasing the article transfer efficiency.

It should be noted that the article storage mechanism 3 is not limited only to the material box robot, and in an embodiment of the present disclosure, articles may be sequentially placed onto multiple loading plates 13 of the article transfer device 1 by an operator, and then the multiple loading plates 13 performs article exchange with the conveying platform 12. Furthermore, the conveying device 2 is not limited to the roller conveying line, and may also be a conveying belt. The conveying belt and the roller conveying line both can convey articles to a preset position, or when the conveying belt or the roller conveying line conveys articles, an operator can sort the articles.

In an embodiment of the present disclosure, taking the article storage mechanism 3 being the material box robot, and the conveying device 2 being the roller conveying line, the material box robot transferring articles to the conveying device 2 by the article transfer device 1 as an example. As shown in FIG. 6, articles are placed on multiple article storage positions of the material box robot, the material box robot can move to the article transfer device 1, place the articles on all the article storage positions of the material box robot onto multiple loading plates 13 of the article transfer device 1, the lift assembly 14 controls the multiple loading plates 13 to move down, the first comb structure 131 of each loading plate 13 runs through the second comb structure of the conveying platform 12 to transfer the articles 9 on the loading plates 13 to the conveying platform 12, and the conveying platform 12 transfers the articles 9 to the roller conveying line 2.

The warehousing system provided by the embodiments of the present disclosure includes an article transfer device 1, a conveying device 2 and an article storage mechanism 3. The article transfer device 1 can transfer article in cooperation with the article storage mechanism 3 and the conveying device 2, increasing the article transfer efficiency. Further, the article transfer device features small volume and small occupation space. In addition, the system has the advantages of simple structure and low costs.

The above descriptions are used to help those skilled in the arts to understand the technical solutions of the present disclosure rather than to limit the present disclosure. Any modifications, equivalent substitutions and improvements and the like made within the spirit and principle of the present disclosure all shall be encompassed into the scope of protection of the present disclosure.

## Claims

1. An article transfer device, comprising:
a machine frame, comprising a machine chamber;
a lift assembly;
a conveying platform, at a bottom of the machine chamber of the machine frame; and
multiple loading plates, connected with the machine frame by the lift assembly;
wherein each loading plate of the multiple loading plates is provided with a first comb structure comprising multiple first loading rods, and the conveying platform is provided with a second comb structure comprising multiple second loading rods and matching the first comb structure; and
in response to that the article transfer device transfer articles, the lift assembly is configured to control the multiple loading plates to move along a direction perpendicular to the conveying platform, and the first comb structures of the multiple loading plates run through a plane where the second comb structure of the conveying platform is located, such that the multiple loading plates perform article exchange with the conveying platform.

2. The article transfer device of claim 1, wherein for each of the multiple first loading rods, the first loading rod is a telescopic rod;
in response to that each loading plate of the multiple loading plates runs through the plane where the conveying platform is located to transfer an article to the conveying platform, the lift assembly is configured to control multiple telescopic rods of the loading plate to retract and control the loading plate to move down; and
in response to that each loading plate of the multiple loading plates runs through the plane where the conveying platform is located to receive an article from the conveying platform, the lift assembly is configured to control the multiple telescopic rods of the loading plate to extend and control the loading plate to move up.

3. The article transfer device of claim 1, wherein the multiple first loading rods and the multiple second loading rods are alternately disposed.

4. The article transfer device of claim 3, wherein for each first loading rod of the multiple first loading rods, the first loading rod is a non-telescopic rod;
in response to that each loading plate of the multiple loading plates runs through the plane where the conveying platform is located to transfer an article to the conveying platform, the lift assembly is configured to control multiple non-telescopic rods of the loading plate to move down through the multiple second loading rods; and
in response to that each loading plate of the multiple loading plates runs through the plane where the conveying platform is located to receive an article from the conveying platform, the lift assembly is configured to control the multiple non-telescopic rods of the loading plate to move up.

5. The article transfer device of claim 1, further comprising a control mechanism; wherein,
the control mechanism is inside the machine frame or at an outer side of the machine frame; and
the control mechanism is configured to control the multiple second loading rods, the multiple loading plates and a conveying device for conveying articles to perform article exchange.

6. The article transfer device of claim 5, wherein for each second loading rod of the multiple second loading rods of the conveying platform, the second loading rod is a rotatable rod; and
the control mechanism is configured to control rotation of the rotatable rods of the conveying platform, such that the conveying platform performs article exchange with the conveying device during the rotation of the rotatable rods of the conveying platform.

7. The article transfer device of claim 5, wherein for each second loading rod of the multiple second loading rods of the conveying platform, the second loading rod is a telescopic rod;
in response to that each loading plate runs through the plane where the conveying platform is located to perform article exchange with the conveying platform, the control mechanism is configured to control the telescopic rods of the conveying platform to extend or retract; and
the control mechanism is further configured to control the telescopic rods to rotate, such that the conveying platform performs article exchange with the conveying device during rotation of the telescopic rods of the conveying platform.

8. The article transfer device of claim 1, wherein the multiple loading plates comprise a first loading plate and a second loading plate; the first loading plate is under the second loading plate;
the first loading plate drops to a first predetermined position below the conveying platform and stops dropping, and the second loading plate drops to stack on the first loading plate; and
the second loading plate moves to a second predetermined position from bottom up, and a hitching portion of the second loading plate is hitched to a position limiter of the first loading plate, and the second loading plate continues moving up to bring the first loading plate to move up by the hitching portion of the second loading plate.

9. The article transfer device of claim 1, wherein the multiple loading plates comprise a first loading plate and a second loading plate;
the first loading plate comprises a loading plate body, the first comb structure is transversely on the loading plate body, a direction guiding structure is provided vertically on the loading plate body, and a position limiter is provided at an end of the direction guiding structure away from the loading plate body; and
a hitching portion is provided on the second loading plate, the first loading plate is under the second loading plate, and the first loading plate is hitched to the hitching portion of the second loading plate by the position limiter of the first loading plate; wherein the hitching portion of the second loading plate is inside the direction guiding structure of the first loading plate, such that the second loading plate moves up and down along the direction guiding structure of the first loading plate.

10. The article transfer device of claim 9, wherein the direction guiding structure provided vertically on the loading plate body comprises an elongated guiding member, and a guiding groove is provided along a length direction of the elongated guiding member in the elongated guiding member; the position limiter is on a top end of the guiding groove; and
the hitching portion of the second loading plate is inside the guiding groove of the first loading plate, such that the second loading plate moves up and down along the guiding groove of the first loading plate.

11. The article transfer device of claim 10, wherein for each loading plate of the multiple loading plates, the elongated guiding member of the loading plate comprises a first guiding member and a second guiding member, and the first guiding member and the second guiding member are provided parallelly at both sides of the loading plate body of the loading plate; a first guiding groove is provided along a length direction of the first guiding member, and a second guiding groove is provided along a length direction of the second guiding member; the hitching portion of the second loading plate comprises a first hitching portion and a second hitching portion; and
the first hitching portion of the second loading plate is in the first guiding groove of the first loading plate, and the second hitching portion of the second loading plate is in the second guiding groove of the first loading plate.

12. The article transfer device of claim 11, wherein the machine frame comprises a first column and a second column, the first column and the second column are in parallel, and the machine chamber is formed between the first column and the second column;
a third guiding groove is provided along a length direction of the first column in the first column; a fourth guiding groove is provided along a length direction of the second column in the second column; the third guiding groove is opposite to the fourth guiding groove;
an end of the first hitching portion of the second loading plate is outside the first guiding groove of the first loading plate and inside the third guiding groove, such that the first loading plate and the second loading plate move up and down along the third guiding groove; and
an end of the second hitching portion of the second loading plate is outside the second guiding groove of the first loading plate and inside the fourth guiding groove, such that the first loading plate and the second loading plate move up and down along the fourth guiding groove.

13. The article transfer device of claim 9, wherein the direction guiding structure provided vertically on the loading plate body comprises an elongated guiding member, and a guiding surface is provided along a length direction of the elongated guiding member in the elongated guiding member; the position limiter is at a top end of the guiding surface; and
the hitching portion of the second loading plate is mated with the guiding surface of the first loading plate, such that the second loading plate moves up and down along the guiding surface of the first loading plate.

14. The article transfer device of claim 13, wherein for each loading plate of the multiple loading plates, the elongated guiding member of the loading plate comprises a third guiding member and a fourth guiding member, the third guiding member and the fourth guiding member are provided parallelly at both sides of the loading plate body of the loading plate, and the position limiter is at top ends of the third guiding member and the fourth guiding member;
a first guiding surface is provided along a length direction of the third guiding member, and a second guiding surface is provided along a length direction of the fourth guiding member; and
the hitching portion of the second loading plate comprises a third hitching portion and a fourth hitching portion; the third hitching portion of the second loading plate is mated with the first guiding surface of the first loading plate, such that the third hitching portion of the second loading plate moves up and down along the first guiding surface of the first loading plate; and the fourth hitching portion of the second loading plate is mated with the second guiding surface of the first loading plate, such that the fourth hitching portion of the second loading plate moves up and down along the second guiding surface of the first loading plate.

15. The article transfer device of claim 1, wherein the machine frame comprises a first column and a second column, the first column and the second column are in parallel, and the machine frame is formed between the first column and the second column;
a third guiding groove is provided along a length direction of the first column in the first column; a fourth guiding groove is provided along a length direction of the second column in the second column; the third guiding groove is opposite to the fourth guiding groove;
in the multiple loading plates, a first side of at least one loading plate is provided with a first protrusion portion, and a second side of the at least one loading plate is provided with a second protrusion portion; and
the first protrusion portion is inside the third guiding groove such that the at least one loading plate moves up and down along the third guiding groove; the second protrusion portion is inside the fourth guiding groove such that the at least one loading plate moves up and down along the fourth guiding groove.

16. The article transfer device of claim 1, wherein the lift assembly comprises a drive mechanism and a traction member connected with the drive mechanism, and the traction member is connected with a topmost loading plate in the multiple loading plates.

17. The article transfer device of claim 1, wherein in the multiple loading plates, a distance between two adjacent loading plates above the conveying platform is greater than a distance between two adjacent loading plates below the conveying platform.

18. A warehousing system, comprising a conveying device, an article storage mechanism and the article transfer device in any one of claims 1 to 17; wherein,
the article transfer device is connected with the conveying device;
the article transfer device is configured to perform article exchange with the article storage mechanism and the conveying device respectively.

19. The warehousing system of claim 18, wherein the article storage mechanism is a material box robot.

20. The warehousing system of claim 18, wherein the conveying device is a roller conveying line.
